# EUROPEAN PATENT SPECIFICATION

(11) **EP 3 187 709 B1**
(45) Date of publication and mention of the grant of the patent: **26.06.2019**
(21) Application number: 15836755.7
(22) Date of filing: 27.08.2015
(51) Int. Cl.: F02B 37/04, F02B 39/10, H02P 6/18, F02B 37/14, F02D 41/00, H02P 6/16, H02P 6/20, H02P 21/34, F02B 39/16, F02D 41/02, H02P 6/08

(54) **ELECTRIC SUPERCHARGER**
ELEKTRISCHER SUPERLADER
COMPRESSEUR D'ALIMENTATION ÉLECTRIQUE

(30) Priority: 28.08.2014 JP 2014173979
(43) Date of publication of application: 05.07.2017
(73) Proprietor: Kabushiki Kaisha Toyota Jidoshokki, Kariya-shi, Aichi 448-8671 (JP)
(72) Inventor: YOSHIZAWA, Hiromasa, Kariya-shi Aichi 448-8671 (JP); MAEDA, Yoshihiro, Kariya-shi Aichi 448-8671 (JP)
(74) Representative: Winter, Brandl, Fürniss, Hübner, Röss, Kaiser, Polte - Partnerschaft mbB
(86) International application number: PCT/JP2015/074299
(87) International publication number: WO 2016/031939

(56) References cited:
- EP-A2- 0 367 406
- GB-A- 2 492 354
- JP-A- 2005 086 947
- JP-A- 2006 226 155
- JP-A- 2007 071 137
- JP-A- 2007 162 510
- JP-A- 2007 224 818
- JP-A- 2014 088 832

## Description

### TECHNICAL FIELD

The present invention relates to a motor-driven supercharger.

### BACKGROUND ART

A motor-driven supercharger that is mounted on a vehicle includes an electric motor that drives a compressor. The motor-driven supercharger includes a stator and a rotor. When three-phase alternating current flows to a stator coil, a rotating magnetic field occurs between the stator and the rotor. This rotating magnetic field rotates the rotary shaft of the electric motor together with the compressor. A motor-driven supercharger disclosed in JP 2005-086947 A forcibly drives a compressor by an electric motor when the driver depresses the acceleration pedal. This initiates forced induction to quickly accelerate the vehicle to a desired speed during a period until the turbocharger mounted on the vehicle starts functioning sufficiently. Before motor-driven forced induction is started, it is necessary to detect the rotational position of the rotor of the electric motor. In the past, an acceleration operation amount, which is the operation amount of the acceleration pedal, has been used as a criterion for determining when detection of the rotational position is started. Documents JP 2007-224818 A, JP 2005-086947 A, GB 2 492 354 A, EP 0 367 406 A2, JP 2007 071137 A, JP 2014 088832 A, JP 2007 162510 A and JP 2006 226155Aalso disclose a control system for a motor-driven supercharger.

### SUMMARY OF THE INVENTION

### Problem that the Invention is to solve

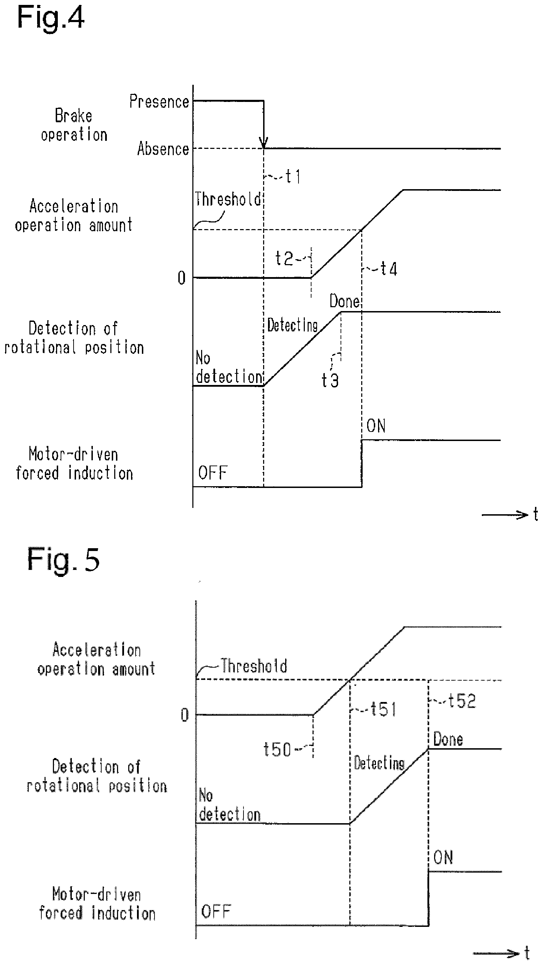

As shown in Fig. 5, operation of an acceleration pedal is started at a time point t50. When the acceleration operation amount reaches a threshold at a time point t51, detection of the rotational position of the rotor of the electric motor is started. When the rotational position detection is completed at a time point t52, the electric motor is activated to start forced induction. Thus, during a period from when detection of the rotational position of the electric motor is started to when the detection is completed, that is, the period from the time point t51 to the time point t52, the activation of a drive motor is delayed, so that the acceleration performance is degraded.

It is an objective of the present invention to provide a motor-driven supercharger that improves the acceleration performance of a vehicle. Means for Solving the Problems

To achieve the above objective, a motor-driven supercharger comprises a stator and a rotor, a stator coil to which a three-phase alternating current flows, a compressor arranged in an intake passage of an engine, an electric motor that drives the compressor, and a controller configured to start detection of a rotational position of the electric motor at least on the condition that a brake operation amount, which is an operation amount of a brake operation member of a vehicle, becomes less than or equal to a threshold. The controller is configured to start forced induction with the electric motor when an acceleration operation amount, which is an operation amount of an acceleration operation member of the vehicle, becomes more than or equal to a threshold.

### BRIEF DESCRIPTION OF THE DRAWINGS

Fig. 1 is a schematic diagram illustrating a supercharger system according to an embodiment.
Fig. 2 is a characteristic diagram illustrating ranges in which a motor-driven supercharger and a turbocharger are used.
Fig. 3 is a flowchart of a procedure executed by an electronic control unit according to the embodiment.
Fig. 4 is a time chart illustrating operation of the embodiment.
Fig. 5 is a time chart illustrating operation of a conventional forced induction system.

### MODES FOR CARRYING OUT THE INVENTION

An embodiment according to the present invention will now be described with reference to the drawings.

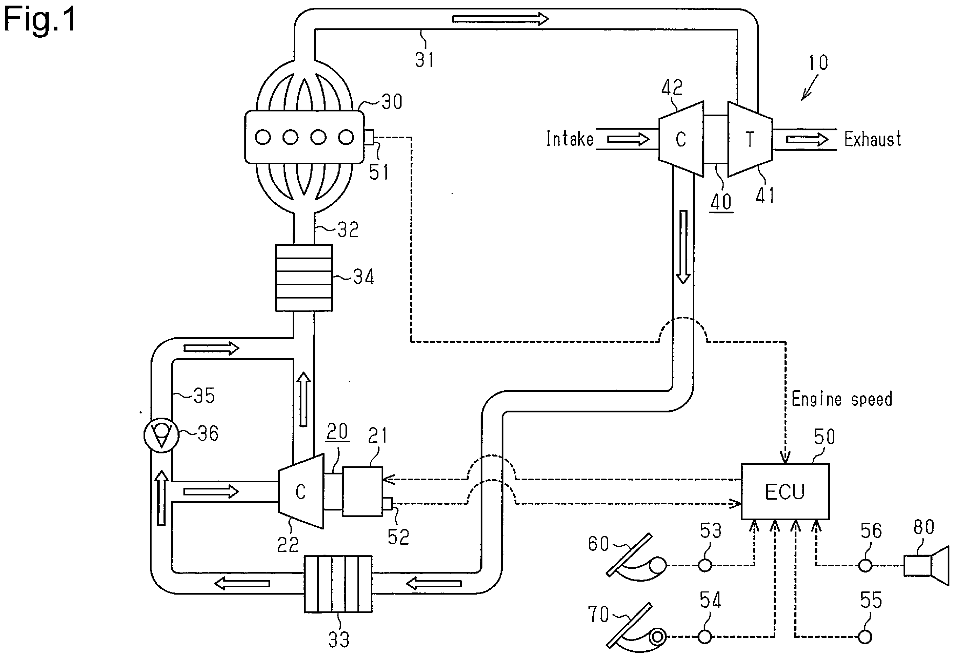

As shown in Fig. 1, a forced induction system 10 according to the present embodiment includes a motor-driven supercharger 20 having an electric motor 21 and a turbocharger 40.

As shown in Fig. 1, an engine 30 is mounted on a vehicle, and the output of the engine 30 is transmitted to the wheels of the vehicle via a transmission 80. The engine 30 is connected to an exhaust passage 31, through which exhaust gas flows, and an intake passage 32, through which intake air flows. The turbine 41 of the turbocharger 40 is arranged in the exhaust passage 31. The compressor 42 of the turbocharger 40 is arranged in the intake passage 32. The compressor 42 is connected to the turbine 41 to be integrally rotational, so that the compressor 42 rotates when the pressure of exhaust gas drives the turbine 41 to rotate. That is, the turbocharger 40 is driven with the energy of exhaust gas of the engine 30 to compress intake air. A first intercooler 33, the compressor 22 of the motor-driven supercharger 20, and a second intercooler 34 are arranged in order in a portion of the intake passage 32 that is located downstream from the compressor 42 of the turbocharger 40.

The motor-driven supercharger 20 includes the compressor 22, which is arranged in the intake passage 32, and the electric motor 21, which is connected to the compressor 22 and drives the compressor 22. The compressor 22 is driven by the electric motor 21 to compress intake air. The intake passage 32 is coupled to a bypass flow passage 35 that bypasses the compressor 22. One end of the bypass flow passage 35 is connected to a portion of the intake passage 32 between the first intercooler 33 and the compressor 22. The other end of the bypass flow passage 35 is connected to a portion of the intake passage 32 between the compressor 22 and the second intercooler 34. A check valve 36 is arranged in the bypass flow passage 35.

The engine 30 and the electric motor 21 are electrically connected to an electronic control unit (ECU) 50, which is a processor or a control circuit. The ECU 50 receives a detection signal from the engine speed sensor 51. The ECU receives a detection signal from a rotational position detection sensor 52, which detects the rotational position of the rotor of the electric motor 21. The ECU 50 receives a detection signal from each of a brake operation sensor 53, an acceleration operation amount sensor 54, a vehicle speed sensor 55, and a gear position sensor 56. The brake operation sensor 53 is a sensor that detects brake operation and includes a brake operation amount sensor, which detects a brake operation amount, which is the operation amount of the brake pedal (a brake operation member) 60, or a switch that detects the presence or absence of operation of the brake pedal 60. The acceleration operation amount sensor 54 detects an acceleration operation amount, which is the operation amount of the acceleration pedal (an acceleration operation member) 70. The gear position sensor 56 detects a gear position (a shift position) of the transmission 80. From these signals, the ECU 50 obtains the engine speed, the brake operation, the acceleration operation amount, the vehicle speed, and the gear position of the transmission 80.

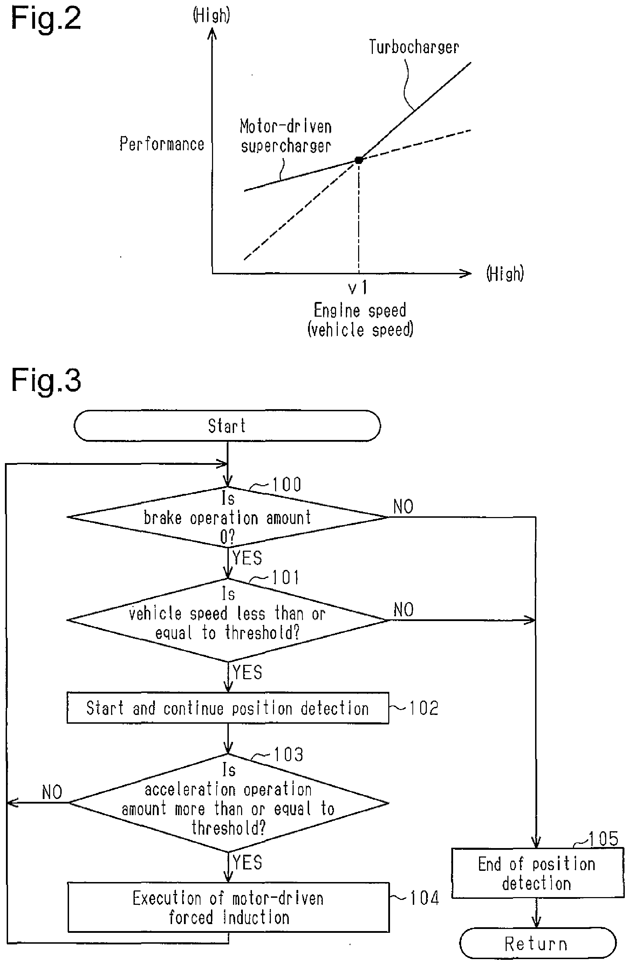

Operation of the forced induction system 10 according to the present embodiment will now be described. With reference to Fig. 1, the flow of intake air in the forced induction system 10 will now be described. When the engine 30 operates at a speed more than or equal to a predetermined speed, the pressure of exhaust gas flowing into the exhaust passage 31 drives the turbine 41 of the turbocharger 40 to rotate. This drives the compressor 42 of the turbocharger 40, so that the compressor 42 compresses the intake air flowing through the intake passage 32. The compressed intake air is cooled by the first intercooler 33. The ECU 50 maintains the electric motor 21 of the motor-driven supercharger 20 in a stopped state when the engine 30 operates at a high speed more than or equal to a predetermined speed v1 (see Fig. 2).

When the compressor 22 of the motor-driven supercharger 20 is not driven to rotate, the compressor 22 becomes an obstacle against the flow of intake air in the intake passage 32. Thus, the intake air flows into the bypass flow passage 35. At this time, the check valve 36 becomes an open state with the pressure of the intake air. The intake air passes through the bypass flow passage 35 and flows into the intake passage 32 again. The intake air then passes through the second intercooler 34 and flows into the engine 30.

When the speed of the engine 30 is changed from a high speed more than or equal to the predetermined speed v1 (see Fig. 2) to a low speed less than the predetermined speed v1, the turbine 41 of the turbocharger 40 cannot obtain sufficient energy from exhaust gas. Thus, the compressor 42 of the turbocharger 40 cannot sufficiently increase the boost pressure of the intake air. When the engine 30 operates at a speed less than the predetermined speed v1, the ECU 50 drives the electric motor 21 of the motor-driven supercharger 20 to rotate.

In particular, when three-phase alternating current flows from a storage battery (not shown) to a stator coil via an inverter (not shown), a rotating magnetic field occurs between the stator and the rotor. This rotates the rotary shaft of the electric motor 21 together with the compressor 22. The intake air, which has not been compressed sufficiently, passes through the compressor 42 of the turbocharger 40. Then, the intake air passes through the first intercooler 33 and is compressed by the compressor 22 of the motor-driven supercharger 20. At this time, the check valve 36, which is arranged in the bypass flow passage 35, is in a closed state, and the intake air does not pass through the bypass flow passage 35. The intake air that is compressed by the compressor 22 flows into the engine 30 after being cooled by the second intercooler 34.

In a case in which the vehicle in a stopped state starts moving, the turbine 41 of the turbocharger 40 cannot obtain sufficient energy from exhaust gas immediately after the vehicle starts moving. Thus, the ECU 50 drives the electric motor 21 of the motor-driven supercharger 20.

Control of the motor-driven supercharger 20 before the turbocharger 40 initiates forced induction will now be described. Before motor-driven forced induction is started, the rotational position of the rotor of the electric motor 21 needs to be detected.

Fig. 3 shows a procedure executed by the ECU 50. Fig. 4 shows change in the brake operation, change in the acceleration operation amount, execution state of rotational position detection, and execution state of motor-driven forced induction.

In Fig. 4, the brake pedal 60 is operated before a time point t1, and the operation of the brake pedal 60 is stopped at the time point t1. At a time point t2 after the time point t1, operation of the acceleration pedal 70 is started.

As shown in Fig. 3, the ECU 50 determines whether the brake operation amount becomes less than or equal to a threshold in Step 100. In particular, the ECU 50 determines whether the brake operation amount is 0 (zero), that is, whether the brake pedal 60 is not depressed. The ECU 50 determines whether the vehicle speed is less than or equal to a threshold (for example, 10 km/h) in Step 101.

When the brake operation amount becomes less than or equal to a threshold in Step 100 and the vehicle speed is less than or equal to the threshold in step 101 (the time point t1 in Fig. 4), the ECU 50 moves to Step 102. The ECU 50 starts detection of the rotational position of the electric motor 21 in Step 102.

The ECU 50 executes processes in Steps 100, 101, and 102, so that detection of the rotational position of the electric motor 21 is completed at a time point t3 in Fig. 4.

The ECU 50 determines whether the acceleration operation amount becomes more than or equal to a threshold in step 103. When the acceleration operation amount becomes more than or equal to the threshold (a time point t4 in Fig. 4) in Step 103 after the detection of the rotational position is completed, the ECU 50 starts forced induction by the electric motor 21 in Step 104 by forcibly driving the compressor 22 to rotate by the electric motor 21.

When the brake pedal 60 is operated in Step 100 or when the vehicle speed is not less than or equal to a threshold in Step 101, the ECU 50 moves to Step 105. The ECU 50 ends detection of the rotational position in Step 105.

In a conventional force induction system shown in Fig. 5, operation of the acceleration pedal is started at the time point t50 before motor-driven forced induction is started. When the acceleration operation amount reaches a threshold at the time point t51, detection of the rotational position of the electric motor is started. The detection of the rotational position is completed at the time point t52, and forced induction is initiated by the electric motor. During the period from the time point t51 to the time point t52, activation of a drive motor is delayed, so that the acceleration performance of the vehicle is degraded. That is, when the acceleration operation amount is used as a criterion for determining detection start of the rotational position, if detection of the rotational position is started after the acceleration operation amount exceeds the threshold, activation of the drive motor is delayed during the period until detection of the rotational position is completed, so that the acceleration performance of the vehicle is degraded.

In contrast, in the present embodiment, which is shown in Fig. 4, detection of the rotational position is started based on the end of the operation of the brake pedal 60. Thus, before the acceleration operation amount reaches a threshold, detection of the rotational position is completed, and forced induction by the electric motor 21 is started at a time point at which the acceleration operation amount reaches the threshold. Therefore, forced induction by the electric motor 21 can be started without the aforementioned delay to improve the acceleration performance of the vehicle. In other words, the forced induction by the electric motor 21 is allowed to be promptly started without being delayed (or shortening the delay).

The above-illustrated embodiment achieves the following advantages.
(1) The motor-driven supercharger is provided with the ECU 50, which functions as a controller (or rotational position detection starting means and electric forced induction starting means). At least on condition that the brake operation amount becomes less than or equal to a threshold, the ECU 50 starts detection of the rotational position of the electric motor 21. When the acceleration operation amount becomes more than or equal to the threshold, the ECU 50 starts forced induction by the electric motor 21. Therefore, detection of the rotational position of the electric motor 21 is started at an early timing to improve acceleration performance of the vehicle.
(2) The ECU 50 starts detection of the rotational position of the electric motor 21 when the vehicle speed is less than or equal to a threshold in addition to that the brake operation amount is less than or equal to a threshold. Thus, while the vehicle speed is taken into account, detection of the rotational position of the electric motor 21 is started at an early timing to improve acceleration performance of the vehicle.

As a modification of the present embodiment, in Step 100 of Fig. 3, instead of starting detection of the rotational position of the electric motor 21 on the condition that brake operation is cancelled, detection of the rotational position of the electric motor 21 may be started on the condition that the ratio of the brake operation amount to the maximum operation amount of the brake is less than or equal to a predetermined value (for example, 10 %).

Embodiment is not limited to the above-described embodiment. For example, the present invention may be implemented in the following manner.

By omitting a process of Step 101 in Fig. 3, detection of the rotational position of the electric motor 21 may be started simply when the brake operation amount becomes less than or equal to a threshold (for example, when the brake operation amount becomes 0 (zero)).

Detection of the rotational position of the electric motor 21 may be started when the brake operation amount becomes 0 (zero) after continuing to exceed a predetermined value for a period more than or equal to a predetermined time (for example, a few seconds).

Detection of the rotational position of the electric motor 21 may be started when the gear position (the shift position) of the transmission 80 is a position other than the parking position or the neutral position and the brake operation amount is 0 (zero). That is, detection of the rotational position of the electric motor 21 may be started considering that the gear position (the shift position) is such a position that allows the vehicle to advance.

The present invention may be applied to a case in which an electric motor is arranged on a shaft that connects the compressor 42 of the intake passage 32 with the turbine 41 of the exhaust passage 31.

## Claims

1. A motor-driven supercharger comprising:
a compressor (22) arranged in an intake passage (32) of an engine;
an electric motor (21) having a stator, a rotor and a stator coil, whereby said electric motor (21) drives the compressor (22) when three-phase alternating current flows to the stator coil; and
a controller (50), **characterized in that**
the controller (50) is configured to start detection of a rotational position of the electric motor (21) when a brake operation amount, which is an operation amount of a brake operation member (60) of a vehicle, becomes 0 after continuing to exceed a predetermined value for a period longer than or equal to a predetermined time, and
the controller (50) is configured to start forced induction with the electric motor (21) when an acceleration operation amount, which is an operation amount of an acceleration operation member of the vehicle, becomes more than or equal to a threshold after the detection of the rotational position is completed.

2. The motor-driven supercharger according to claim 1, wherein the controller (50) is configured to start detection of the rotational position of the electric motor (21) when a gear position of a transmission (80) of the vehicle is a position other than a parking position or a neutral position and the brake operation amount is 0.

## Patentansprüche

1. Motorgetriebener Superlader mit:
einem Kompressor (22), der in einem Ansaugkanal (32) eines Motors angeordnet ist;
einem Elektromotor (21), der einen Stator, einen Rotor und eine Statorspule hat, wobei dieser Elektromotor (21) den Kompressor (22) antreibt, wenn dreiphasiger Drehstrom durch die Statorspule fließt; und
einer Steuerung (50), **dadurch gekennzeichnet, dass**
die Steuerung (50) konfiguriert ist, um das Detektieren einer Rotationsposition des Elektromotors zu starten, wenn ein Bremsbetätigungsbetrag, welcher ein Betätigungsbetrag eines Bremsbetätigungselements (60) eines Fahrzeugs ist, 0 wird, nachdem ein vorbestimmten Wert für eine Zeitspanne, die länger als oder gleich einer vorbestimmten Zeit ist, weiterhin überschritten wurde, und
die Steuerung (50) konfiguriert ist, um eine Zwangsinduktion mit dem Elektromotor (21) zu starten, wenn ein Beschleunigungsbetätigungsbetrag, welcher ein Betätigungsbetrag des Beschleunigungsbetätigungselements des Fahrzeugs ist, mehr als oder gleich einem Schwellenwert wird, nachdem das Detektieren der Rotationsposition abgeschlossen ist.

2. Motorgetriebener Superlader gemäß Anspruch 1, wobei die Steuerung (50) konfiguriert ist, um eine Detektion der Rotationsposition des Elektromotors (21) zu starten, wenn eine Schaltposition eines Getriebes (80) des Fahrzeugs eine andere Position ist als eine Parkposition oder eine Neutralposition und der Bremsbetätigungsbetrag 0 ist.

## Revendications

1. Surcompresseur à entraînement motorisé comprenant :
un compresseur (22) agencé dans un passage d'admission (32) d'un moteur ;
un moteur électrique (21) ayant un stator, un rotor et une bobine de stator, moyennant quoi ledit moteur électrique (21) entraîne le compresseur (22) lorsqu'un courant alternatif triphasé circule vers la bobine de stator ; et
une unité de commande (50),
**caractérisé en ce que**
l'unité de commande (50) est configurée pour initier la détection d'une position de rotation du moteur électrique (21) lorsqu'une quantité de fonctionnement de frein, qui est la quantité de fonctionnement d'un élément de fonctionnement de frein (60) d'un véhicule, devient 0 après avoir continué à dépasser une valeur prédéterminée pendant une période supérieure ou égale à un temps prédéterminé, et
l'unité de commande (50) est configurée pour initier une induction forcée par le moteur électrique (21) lorsqu'une quantité de fonctionnement d'accélération, qui est une quantité de fonctionnement d'un élément de fonctionnement d'accélération du véhicule, devient supérieure ou égale à un seuil après la fin de la détection de la position de rotation.

2. Surcompresseur à entraînement motorisé selon la revendication 1, dans lequel l'unité de commande (50) est configurée pour initier la détection d'une position de rotation du moteur électrique (21) lorsqu'une position d'engrenage d'une transmission (80) du véhicule est une position autre qu'une position de stationnement ou qu'une position neutre et que la quantité de fonctionnement de frein est 0.
